# EUROPÄISCHE PATENTANMELDUNG

(11) **EP 2 662 213 A1**
(43) Veröffentlichungstag der Anmeldung: **13.11.2013**
(21) Anmeldenummer: 12183595.3
(22) Anmeldetag: 07.09.2012
(51) Int. Cl.: B32B 27/30, B32B 27/32, B32B 27/18, B32B 27/08, B32B 27/12, B32B 5/02, B32B 5/18, E04B 1/66

(54) **Abdichtungsvorrichtung mit verbesserter Haftung**

(30) Priorität: 07.05.2012 CH 6412012
(71) Anmelder: Sika Technology AG, 6340 Baar (CH)
(72) Erfinder: Ackermann, Herbert, 8632 Tann (CH); Gössi, Matthias, 8610 Uster (CH); Hoefflin, Frank, 5400 Baden (CH); Keiser, Stefan, 6103 Schwarzenberg (CH); Rohrer, Roman, 6060 Sarnen (CH); Rudolf, Jean-Claude, 6048 Horw (CH)
(74) Vertreter: Sika Patent Attorneys

(57) **Zusammenfassung**

Die vorliegende Erfindung betrifft eine Abdichtungsvorrichtung (1) umfassend eine Schottschicht (2) umfassend ein thermoplastisches Polymer **P1,** sowie eine Haftschicht (3), umfassend mindestens ein Ethylen-Vinylacetat-Copolymer (EVA) **P2** und Azo-dicarbonamid **A**, welche sich zum Abdichten von Untergründen im Baubereich eignet. Weiter betrifft die Erfindung ein Verfahren zum Abdichten erwähnter Untergründe. Dieses Verfahren erlaubt eine schnelle und effiziente Abdichtung von Gebilden des Hoch- und Tiefbaus sowie eine gute Haftung der Abdichtungsvorrichtung auf dem Untergrund.

## Beschreibung

### Technisches Gebiet

Die Erfindung betrifft das Gebiet der Abdichtung von Substraten und Untergründen, insbesondere im Baubereich.

### Stand der Technik

Substrate und Untergründe, welche gegen Wasser abgedichtet werden müssen, insbesondere Betonstrukturen, finden sich viele im Hoch- und Tiefbau. Derartige Substrate und Untergründe werden typischerweise durch Bitumenbahnen oder mechanisch befestigte Kunststoffbahnen abgedichtet. Aufgrund des thermoplastischen Verhaltens sind Bitumenbahnen jedoch anfällig auf Temperaturschwankungen. Elastische Kunststoffbahnen hingegen weisen ein über einen breiten Temperaturbereich konstantes elastisches Verhalten auf und erfüllen somit ihre Funktion als Abdichtung auch unter extremen Temperaturbedingungen. Die Kombination einer Kunststoffbahn mit Bitumen wird aufgrund zahlreicher Nachteile nicht verwendet. Ein Problem dabei ist unter anderem, dass ein guter Haftverbund zwischen der Kunststoffbahn in Kombination mit Bitumen mit einem Substrat oder einem Untergrund vorhanden sein muss, was natürlich die Haftungen aller Zwischenschichten mit umfasst. Insbesondere die Haftung und Verträglichkeit zwischen Kunststofffolie und Bitumen stellt hierbei ein aufgrund der beteiligten Materialien ein sehr schwierig zu lösendes Problem dar.

Dieses System weist weiter den grossen Nachteil auf, dass für das vollständige Schmelzen des Bitumens eine grosse Wärmeleistung erbracht werden muss, was typischerweise den Einsatz einer offenen Flamme erfordert. Dies ist einerseits kostspielig und andererseits kann die schwer kontrollierbare und hohe Wärmeleistung einer solchen offenen Flamme zu Schwelbränden führen. Weiterhin bedingt dieses System, dass nach dem Schmelzen des Bitumens im Falle der Verwendung einer Kunststoffbahn unmittelbar danach die Kunststoffbahn aufgebracht werden muss, was ein vorgängiges Positionieren der Kunststoffbahn verunmöglicht. Weiter ist ein Begehen des Untergrunds nach dem Schmelzen des Bitumens vor dem Aufbringen des Dichtmaterials nicht möglich.

### Darstellung der Erfindung

Die Aufgabe der vorliegenden Erfindung ist es daher, eine Abdichtungsvorrichtung zur Verfügung zu stellen, welche die Nachteile des Standes der Technik nicht aufweist, insbesondere einfach und rationell erstellt und aufgebracht werden kann und zu einem guten Haftverbund zwischen Abdichtungsvorrichtung und Substrat oder Untergrund führt. Ferner soll eine hohe Wasserdichtheit gewährleistet werden.

Überraschenderweise zeigte sich, dass mit einer Abdichtungsvorrichtung dieses Problem gelöst werden kann. Eine derartigere Abdichtungsvorrichtung erlaubt es, auf schnelle und kosteneffiziente Art und Weise ein Substrat oder einen Untergrund, insbesondere eine Betonstruktur, abzudichten.

Es zeigte sich weiterhin, dass mit den bevorzugten Ausführungsformen ein wesentliches Problem des Standes der Technik, nämlich ein gleichmässiges und kontrolliertes Aufbringen vom Haftmittel Bitumen, einfach vermieden werden kann, und so die Qualitätssicherung beim Erstellen einer Abdichtung einfach gesteigert werden kann.

Ein weiterer grosser Vorteil hierbei liegt, dass das notwendige Haftmittel in einem industriellen Prozess auf der Schottschicht kontrolliert verteilt und fixiert werden kann und dass diese Schottschicht mit Haftmittel, nämlich einer Haftschicht, vorkonfektioniert auf der Baustelle zum Einsatz gebracht werden kann. Insbesondere ist es vorteilhaft, dass auf die Verwendung eines Gussbitumens verzichtet werden kann.

Ferner können solche Abdichtungsvorrichtungen auch ohne offene Flamme auf einen Untergrund aufgebracht werden, was insbesondere ein sicherheitstechnischer Vorteil ist.

Ein weiterer grosser Vorteil ist aufgrund der Beschaffenheit der Haftschicht die Möglichkeit, die Abdichtungsvorrichtung vor dem Aufbringen auf dem Untergrund verschiebbar anzuordnen. An der passenden Stelle angebracht, kann danach durch Erwärmen der Haftschicht die Abdichtungsvorrichtung mit dem Untergrund fest verbunden werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt eine Abdichtungsvorrichtung 1 umfassend
- eine Schottschicht 2, umfassend ein thermoplastisches Polymer **P1,**
- sowie eine Haftschicht 3, umfassend
   - mindestens ein Ethylen-Vinylacetat-Copolymer (EVA) **P2** und
   - Azo-dicarbonamid **A.**

Die Schottschicht 2 ist vorzugsweise direkt mit der Haftschicht 3 verbunden. Unter dem Begriff "direkt verbunden" wird verstanden, dass keine weitere Schicht oder Substanz zwischen zwei Werkstoffen vorliegt und dass die zwei Werkstoffe direkt miteinander verbunden sind, beziehungsweise aneinander haften. Am Übergang zwischen zwei Werkstoffen können die zwei Werkstoffe ineinander vermischt vorliegen. Die Haftschicht 3 kann vollflächig oder diskontinuierlich, insbesondere vollflächig, mit der Schottschicht 2 verbunden sein.

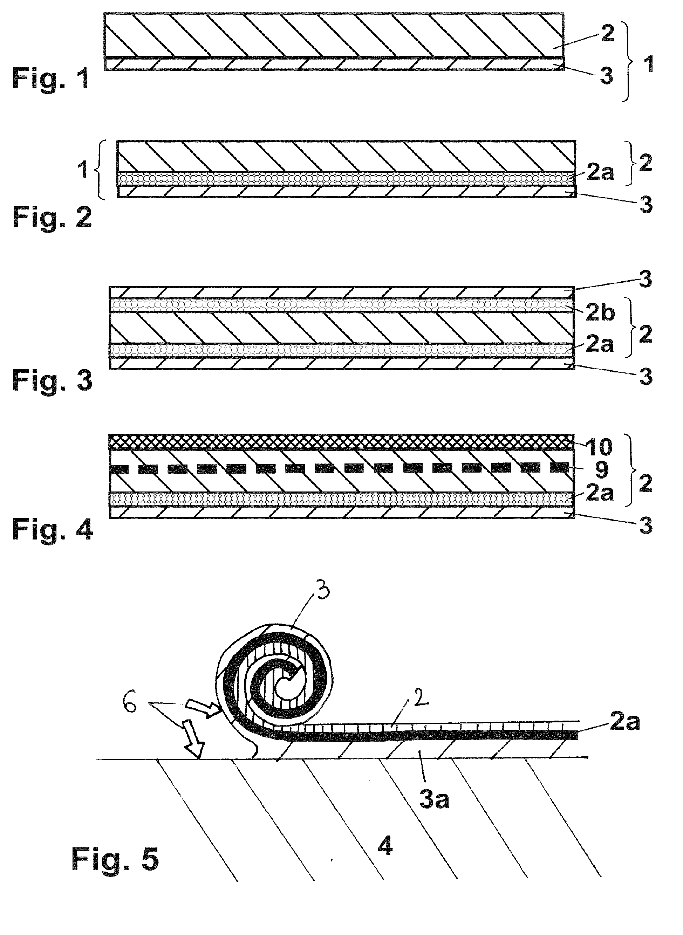

Figur 1 zeigt den Aufbau einer solchen Abdichtungsvorrichtung 1 umfassen eine Schottschicht 2 sowie eine Haftschicht 3 wo die Schottschicht 2 direkt mit der Haftschicht 3 verbunden ist.

Ist die Schottschicht 2 direkt mit der Haftschicht 3 verbunden so ist dies dahingehend von Vorteil, dass dadurch Schottschicht und Haftschicht beispielsweise coextrudiert werden können und weiter ein guter Verbund der beiden Schichten gewährleistet ist.

Ist die Schottschicht 2 direkt mit der Haftschicht 3 verbunden so ist es besonders vorteilhaft, wenn Schottschicht und Haftschicht Polymere enthalten, welche mit den Polymeren der anderen Schicht kompatibel, insbesondere homogen mischbar, sind.

So ist es insbesondere vorteilhaft, wenn es sich bei dem thermoplastischen Polymer **P1** der Schottschicht 2 um Polyethylen (PE) oder ein Copolymer aus Ethylen und Propylen handelt.

Weiter bevorzugt weist die Schottschicht 2 mehr als 40 Gew.-% der vorgehend als bevorzugte Polymere **P1** aufgeführte Polymere **P1** auf, bezogen auf das Gesamtgewicht der Schottschicht 2.

Besonders bevorzugt weist die Schottschicht 2 70-100 Gew.-%, insbesondere 90-100 Gew.-%, insbesondere 95-100 Gew.-% Polymere **P1** ausgewählt aus der Liste bestehend aus Polyethylen (PE) und Copolymer aus Ethylen und Propylen, auf, bezogen auf das Gesamtgewicht der Polymere, welche in der Schottschicht 2 enthalten sind.

Um als Schottschicht 2 möglichst geeignet zu sein, sollte sie möglichst wasserdicht sein und sich auch unter längerem Einfluss von Wasser, beziehungsweise Feuchtigkeit, nicht zersetzen oder mechanisch beschädigt werden.

Die Schottschicht 2 umfasst ein thermoplastisches Polymer **P1.** Vorzugsweise handelt es sich bei dem thermoplastischen Polymer **P1** um thermoplastische Polyolefine und/oder Polyvinylchlorid (PVC).

Besonders bevorzugt handelt es sich bei dem thermoplastischen Polymer **P1** um ein Polymer, welches ausgewählt sind aus der Gruppe bestehend aus Polyethylen mit hoher Dichte (HDPE), Polyethylen mit mittlerer Dichte (MDPE), Polyethylen mit tiefer Dichte (LDPE), Polyethylen (PE), Polypropylen (PP), Polyethylenterephthalat (PET), Polystyrol (PS), Polyvinylchlorid (PVC), Polyamide (PA), Ethylen-Vinylacetat (EVA), chlorsulfoniertes Polyethylen und thermoplastische Elastomere auf Polyolefin-Basis (TPO).

Am meisten bevorzugt handelt es sich es sich bei dem thermoplastischen Polymer **P1** der Schottschicht 2 um Polyethylen (PE) oder ein Copolymer aus Ethylen und Propylen.

Als Schottschicht sind insbesondere Folien geeignet, wie sie für Abdichtungszwecke im Hoch- und Tiefbau bereits im Stand der Technik eingesetzt werden. Um durch ein Erwärmen bei dem Aufbringen der Abdichtungsvorrichtung auf einem Untergrund möglichst wenig geschädigt oder verändert zu werden, ist es besonders vorteilhaft, wenn die Schottschicht aus einem Material mit einem Erweichungspunkt von über 70°C, bevorzugt zwischen 80 °C und 110°C, gefertigt sind. Die Schottschicht sollte vorteilhaft ein zumindest geringes Ausmass an Elastizität aufweisen, um beispielsweise durch Temperaturen verursachte Ausdehnungsunterschiede zwischen Abdichtungsvorrichtung und Substrat oder Untergrund oder durch Risse im Untergrund verursachte Spannungen überbrücken zu können, ohne dass die Schottschicht beschädigt wird oder reisst und die Dichtfunktion der Schottschicht beeinträchtigen würde.

Vorzugsweise weist die Schottschicht 2 eine Dicke von 0.1 - 10 mm, insbesondere 1 - 5 mm, auf

Vorzugsweise weist die Schottschicht 2 auf der der Haftschicht 3 zugewandten Seite einen geschäumten Teil 2a auf. Dies ist beispielsweise in Figur 2 gezeigt. Dies ist dahingehend von Vorteil, dass ein geringerer Wärmeeintrag nötig ist, um die Haftschicht zu erwärmen. Weiter können auch Wärmequellen zur Erwärmung verwendet werden, deren Wärmeeintrag weniger leicht zu kontrollieren ist.

Weiter ist es vorteilhaft, wenn die Dicke des geschäumten Teils der Schottschicht 2a 20 - 80 %, insbesondere 45 - 65 %, der gesamten Dicke der Schottschicht 2 beträgt.

Vorzugsweise weist der geschäumte Teil der Schottschicht 2a eine Dichte von 200 - 700 kg/m³, insbesondere 300 - 500 kg/m³, auf.

Die Haftschicht 3 umfasst mindestens ein Ethylen-Vinylacetat-Copolymer (EVA) **P2**.

Vorzugsweise weist das Ethylen-Vinylacetat-Copolymer **P2** einen Vinylacetat-Gehalt von 7 - 30 Gew.-%, insbesondere 15 - 30 Gew.-%, bevorzugt 25 - 30 Gew.-%, auf. Dies ist einer guten Haftung auf Substraten, insbesondere Beton, zuträglich.

Weiter kann es vorteilhaft sein, wenn der Anteil von Azo-dicarbonamid **A** 0.1 - 15 Gew.-%, insbesondere 0.5 - 5 Gew.-%, insbesondere bevorzugt 0.5 - 3 Gew.-%, am meisten bevorzugt 0.5 - 2 Gew.-%, beträgt, bezogen auf das Gesamtgewicht der Summe von (Ethylen-Vinylacetat-Copolymer **P2** + Azo-dicarbonamid **A**). Dies ist einer guten Haftung auf Beton zuträglich.

Auch kann es vorteilhaft sein, wenn der Anteil von Azo-dicarbonamid **A** 2 - 10 Gew.-%, insbesondere 4 - 8 Gew.-%, insbesondere bevorzugt 4 - 6 Gew.-%, beträgt, bezogen auf das Gesamtgewicht der Summe von (Ethylen-Vinylacetat-Copolymer **P2** + Azo-dicarbonamid **A**). Es wurde überraschenderweise gefunden, dass es dadurch zu einer besonders guten Haftung auf Betonoberflächen kommt, welche mit einem Epoxidharz-basierten Primer vorbehandelt wurden.

Solche Epoxidharz-basierten Primer weisen (vor dem Aushärten) eine bei Raumtemperatur fliessfähige Konsistenz auf und werden typischerweise durch Aufstreichen, Aufsprühen oder Giessen auf den Untergrund aufgebracht. Es ist zu bemerken, dass hierbei mit dem Term "fliessfähig" nicht nur flüssige, sondern auch höher viskose honigartige bis pastöse Materialen bezeichnen werden, deren Form unter dem Einfluss der Erdanziehungskraft angepasst wird.

Insbesondere sind dies zweikomponentige Epoxidharzharz-Zusammensetzungen, insbesondere solche deren eine (d.h. erste) Komponente ein Epoxidharz, insbesondere eine Epoxidharz auf Basis von Bisphenol-A-Diglycidylether, enthält und die andere (d.h. zweite) Komponente einen Härter, insbesondere ein Polyamin oder ein Polymercaptan, enthält. Weiterhin vorteilhaft sind die Epoxidharzharz-Zusammensetzungen dünnflüssig, insbesondere mit einer Viskosität von unter 10'000 mPas, bevorzugt zwischen 10 und 1'000 mPas. Besonders bevorzugt als zweikomponentige Epoxidharzharz-Zusammensetzungen gelten dünnflüssige, zweikomponentige Epoxidharzharz-Zusammensetzungen, wie sie unter den Handelsreihennamen Sikaprimer®, Sikafloor®, Sikagard® oder Sika Ergodur® von Sika Deutschland GmbH, beziehungsweise Sika Schweiz AG, vertrieben werden.

Weiter kann es vorteilhaft sein, wenn die Haftschicht 30-12 Gew.-%, insbesondere 0- 6 Gew.-%, insbesondere bevorzugt 0 - 1 Gew.-%, am meisten bevorzugt 0 Gew.-%, bezogen auf das Gesamtgewicht der Haftschicht, eines Polymers **P3** aufweist, welches ausgewählt ist aus der Gruppe bestehend aus:
- Maleinsäureanhydrid-funktionalisiertes Polyethylen, insbesondere Maleinsäureanhydrid-funktionalisiertes LDPE oder Maleinsäureanhydrid-funktionalisiertes HDPE (PE-MAH) und
- Maleinsäureanhydrid-funktionalisiertes Copolymer aus Ethylen und Vinylacetat (EVA-MAH).

Dies ist einer guten Haftung auf Beton zuträglich.

Weiter kann aber auch vorteilhaft sein, wenn die Haftschicht 3 weiter ein Polymer P3 aufweist, welches ausgewählt ist aus der Gruppe bestehend aus:
- Maleinsäureanhydrid-funktionalisiertes Polyethylen, insbesondere Maleinsäureanhydrid-funktionalisiertes LDPE oder Maleinsäureanhydrid-funktionalisiertes HDPE (PE-MAH) und
- Maleinsäureanhydrid-funktionalisiertes Copolymer aus Ethylen und Vinylacetat (EVA-MAH).

Vorzugsweise beträgt der Anteil von Polymer **P3** 4 - 17 Gew.-%, insbesondere 12 - 16 Gew.-%, bezogen auf das Gesamtgewicht der Summe von (Ethylen-Vinylacetat-Copolymer **P2** + Polymer **P3** + Azo-dicarbonamid **A**); und
der Anteil von Azo-dicarbonamid **A** beträgt 2 - 6 Gew.-%, insbesondere 4 - 6 Gew.-%, bezogen auf das Gesamtgewicht der Summe von (Ethylen-Vinylacetat-Copolymer **P2** + Polymer **P3** + Azo-dicarbonamid **A**).

Dadurch wird eine gute Haftung auf Betonoberflächen erreicht, welche mit einem Epoxidharz-basierten Primer vorbehandelt wurden.

Weiter ist es vorteilhaft, wenn die Haftschicht 3 < 1 Gew.-%, insbesondere 0 - 0.5 Gew.-%, bevorzugt 0 - 0.1 Gew.-%, am meisten bevorzugt kein Epoxidharz aufweist, bezogen auf das Gesamtgewicht der Haftschicht.

Unter dem Begriff "Epoxidharz" werden im vorliegenden Dokument sowohl Epoxid-Festharze als auch Epoxid-Flüssigharze verstanden.

Dies ist unter anderem einer besseren Haftung auf Substraten, insbesondere auf Beton, zuträglich.

Die Haftschicht 3 umfasst Azo-dicarbonamid **A.**

Um die Aktivierungstemperatur von Azo-dicarbonamid (auch Azobisformamid oder Diazendicarbonsäurediamid genannt) zu reduzieren, kann es beispielsweise vorteilhaft sein, dem Azo-dicarbonamid einen Katalysator wie beispielsweise Zinkoxid oder Harnstoff beizugeben, typischerweise in einer Menge von 10 - 50 Gew.-%, bezogen auf das Gesamtgewicht des Azo-dicarbonamid **A.**

Vorzugsweise ist die Haftschicht 3 bei 23 °C klebfrei. Unter dem Begriff "klebfrei" im Zusammenhang mit der Haftschicht 3 wird im ganzen vorliegenden Dokument eine Oberflächenklebrigkeit im Sinne einer Soforthaftung oder "Tack" verstanden, welche bei 23 °C so gering ist, dass bei dem Drücken mit einem Daumen mit einem Druckaufwand von ca. 5 kg für 1 Sekunde auf die Oberfläche der Haftschicht der Daumen nicht auf der Oberfläche der Haftschicht kleben bleibt, respektive die Haftschicht nicht aufgehoben werden kann. Dadurch kann die Abdichtungsvorrichtung leichter gelagert, transportiert und verarbeitet werden.

Besonders bevorzugt sind Haftschichten 3, umfassend
70-99.5 Gew.-%, insbesondere 80-99 Gew.-%, bevorzugt 90-99 Gew.-%, Ethylen-Vinylacetat-Copolymer **P2,** und
0.5 - 5 Gew.-%, insbesondere bevorzugt 0.5 - 3 Gew.-%, bevorzugt 0.5 - 2 Gew.-%, Azo-dicarbonamid **A.**

Bevorzugt bestehen diese Haftschichten zu mehr als 50 Gew.-%, insbesondere zu mehr als 70 Gew.-%, insbesondere zu mehr als 80 Gew.-%, bevorzugt zu mehr als 90 Gew.-%, am meisten bevorzugt zu mehr als 98 Gew.-%, aus vorgehend genannten Komponenten **P2** und **A.**

Vorzugsweise weisen diese Haftschichten 0 - 1 Gew.-%, insbesondere 0 Gew.-%, bezogen auf das Gesamtgewicht der Haftschicht, eines Polymers **P3** auf, welches ausgewählt ist aus der Gruppe bestehend aus:
- Maleinsäureanhydrid-funktionalisiertes Polyethylen, insbesondere Maleinsäureanhydrid-funktionalisiertes LDPE oder Maleinsäureanhydrid-funktionalisiertes HDPE (PE-MAH) und
- Maleinsäureanhydrid-funktionalisiertes Copolymer aus Ethylen und Vinylacetat (EVA-MAH).

Weiter bevorzugt sind Haftschichten 3, umfassend
70-98 Gew.-%, insbesondere 80-96 Gew.-%, bevorzugt 90-96 Gew.-%, Ethylen-Vinylacetat-Copolymer **P2,** und
2 - 10 Gew.-%, insbesondere bevorzugt 4 - 8 Gew.-%, bevorzugt 4 - 6 Gew.-%, Azo-dicarbonamid **A.**

Bevorzugt besteht die Haftschichten zu mehr als 50 Gew.-%, insbesondere zu mehr als 70 Gew.-%, insbesondere zu mehr als 80 Gew.-%, bevorzugt zu mehr als 90 Gew.-%, am meisten bevorzugt zu mehr als 95 Gew.-%, aus vorgehend genannten Komponenten **P2** und **A.**

Vorzugsweise weisen die Haftschichten 0 - 1 Gew.-%, insbesondere 0 Gew.-%, bezogen auf das Gesamtgewicht der Haftschicht, eines Polymers **P3** auf, welches ausgewählt ist aus der Gruppe bestehend aus:
- Maleinsäureanhydrid-funktionalisiertes Polyethylen, insbesondere Maleinsäureanhydrid-funktionalisiertes LDPE oder Maleinsäureanhydrid-funktionalisiertes HDPE (PE-MAH) und
- Maleinsäureanhydrid-funktionalisiertes Copolymer aus Ethylen und Vinylacetat (EVA-MAH).

Weiter bevorzugt sind Haftschichten 3, umfassend
77-94 Gew.-%, insbesondere 78-84 Gew.-%, Ethylen-Vinylacetat-Copolymer **P2,** und
4-17 Gew.-%, insbesondere 12-16 Gew.-%, eines Polymers **P3,** welches ausgewählt ist aus der Gruppe bestehend aus:
- Maleinsäureanhydrid-funktionalisiertes Polyethylen, insbesondere Maleinsäureanhydrid-funktionalisiertes LDPE oder Maleinsäureanhydrid-funktionalisiertes HDPE (PE-MAH) und
- Maleinsäureanhydrid-funktionalisiertes Copolymer aus Ethylen und Vinylacetat (EVA-MAH), und
2 - 6 Gew.-%, insbesondere 4 - 6 Gew.-%, Azo-dicarbonamid **A.**

Bevorzugt besteht die Haftschichten zu mehr als 50 Gew.-%, insbesondere zu mehr als 70 Gew.-%, insbesondere zu mehr als 80 Gew.-%, bevorzugt zu mehr als 90 Gew.-%, aus vorgehend genannten Komponenten **P2, P3** und **A.**

Weiter ist es vorteilhaft wenn die Haftschicht 3 eine Dicke von 0.05 - 0.5 mm, 0.1 - 0.3 mm, aufweist.

Vorzugsweise kann die Schottschicht 2 beidseitig eine Haftschicht 3 aufweisen, dies ist beispielsweise in Figur 3 gezeigt. Dabei kann die Schottschicht einen oder zwei geschäumte Teile aufweisen, wie dies als 2a und 2b in Figur 3 ersichtlich ist, oder auch nicht.

Weiter kann es von Vorteil sein, wenn die Schottschicht 2 eine Trägerschicht 9 aufweist. Die Trägerschicht 9 trägt zur Formstabilität der Schottschicht bei. Vorzugsweise handelt es sich um einen Faserwerkstoff oder ein Gitter, insbesondere ein Faserwerkstoff. Unter dem Begriff "Faserwerkstoff" ist im ganzen vorliegenden Dokument ein Werkstoff zu verstehen, welcher aus Fasern aufgebaut ist. Die Fasern umfassen oder bestehen aus organischem oder synthetischem Material. Insbesondere handelt es sich um Zellulose-, Baumwollfasern, Proteinfasern, synthetische Fasern oder anorganische Fasern, wie beispielsweise Glasfasern. Als synthetische Fasern sind vor allem bevorzugt Fasern aus Polyester oder aus einem Homo- oder Copolymeren von Ethylen und/oder Propylen oder aus Viskose zu nennen. Die Fasern können hierbei Kurzfasern oder Langfasern, gesponnene, gewebte oder ungewebte Fasern oder Filamente sein. Weiterhin können die Fasern gerichtete oder gestreckte Fasern sein. Weiterhin kann es vorteilhaft sein, unterschiedliche Fasern, sowohl in Geometrie als auch Zusammensetzung, miteinander zu verwenden.

Der aus Fasern aufgebaute Körper kann auf die verschiedensten dem Fachmann bekannten Verfahren hergestellt werden. Insbesondere kommen Körper zum Einsatz, die ein Gewebe, Gelege oder Gewirke sind. Besonders bevorzugt als Faserwerkstoff ist ein Filz oder Vlies.

Vorzugsweise ist die Trägerschicht in die Schottschicht eingearbeitet, weiter ist es vorteilhaft, wenn die Trägerschicht 9 Zwischenräume aufweist, welche zumindest teilweise vom Material der Schottschicht 2 durchsetzt sind. Dies ist einem guten Verbund von Schottschicht und der Trägerschicht zuträglich.

Weiter kann es von Vorteil sein, wenn die Schottschicht 2 eine Deckschicht 10 aufweist, welche vorzugsweise auf der Haftschicht 3 abgewandten Seite angebracht ist. Enthält die Deckschicht UV-Stabilisatoren, so kann die Deckschicht die Abdichtungsvorrichtung beispielsweise vor Alterung durch Sonnenlicht schützen. Enthält die Deckschicht Farbpigmente, so können Beschädigungen auf der der Haftschicht abgewandten Seite der Abdichtungsvorrichtung, beispielsweise bedingt durch den Transport oder das Verlegen, durch ein Fehlen der Deckschicht an der schadhaften Stelle entdeckt werden.

Eine Abdichtungsvorrichtung, deren Schottschicht eine eingearbeitete Trägerschicht 9 sowie eine Deckschicht 10 aufweist, ist beispielsweise in Figur 4 gezeigt.

Es ist weiter von Vorteil, wenn es sich bei Abdichtungsvorrichtung 1 um eine flexible Membran, insbesondere um eine flexible Bahn, handelt. Diese kann einfach gerollt und somit einfach gelagert, beziehungsweise transportiert, werden. So gelangt die Abdichtungsvorrichtung einfach auf die Baustelle und kann dort abgerollt und auf die benötigten Dimensionen abgeschnitten werden. Dies ist ein sehr kosten- und zeiteffizienter Arbeitsschritt.

Ein weiterer Aspekt der vorliegenden Erfindung betrifft ein Verfahren zum Abdichten eines Substrats **S1** 4 umfassend die Schritte
i) Aufbringen einer Abdichtungsvorrichtung 1, wie sie vorgehend beschreiben ist, auf ein Substrat **S1** 4, wobei die Haftschicht 3 dem Substrat **S1** 4 zugewandt ist;
ii) Erwärmen der Haftschicht 3 der Abdichtungsvorrichtung 1, vorzugsweise auf eine Temperatur von 80 - 600 C°.

Bei dem Substrat **S1** 4 handelt es sich vorzugsweise um ein Gebilde des Hoch- oder Tiefbaus, welche man gegen Feuchtigkeit und Wasser abdichten möchte. Er kann weiterhin das Erdreich, ein Bauwerk, ein Isolationsmaterial oder eine Schalung sein. Das Substrat **S1** 4 kann dabei waagrecht sein oder auch nicht.

Insbesondere ist das Material des Substrats S1 Holz, Metall, eine Metalllegierung, ein mineralisches Bindemittel wie Beton oder Gips, Kunststoff oder Wärmedämmmittel wie geschäumtes Polyurethan, Mineralwolle oder geschäumtes Glas (Foamglas). Besonders bevorzugt ist das Material Holz, Metall, eine Metalllegierung oder Beton, insbesondere Beton. Am meisten bevorzugt ist das Material Beton, insbesondere Beton.

Das Aufbringen der Abdichtungsvorrichtung 1 auf ein Substrat **S1** 4 in Schritt i) kann beispielsweise durch Abrollen der Abdichtungsvorrichtung oder ein vollflächiges Verlegen der Abdichtungsvorrichtung erfolgen. Handelt es sich bei der Haftschicht 3 um eine bei 23 °C klebfreie Haftschicht, kann die Abdichtungsvorrichtung bis zum Erwärmen in Schritt ii) bequem auf dem Substrat S1 (re-)positioniert werden.

Die Erwärmung kann auf jegliche Art und Weise erfolgen. Die Erwärmung kann durch externe oder durch interne Wärmequellen, wie einer exothermen chemischen Reaktion, erbracht werden. Vorzugsweise wird die Erwärmung in Schritt ii) durch Heissluft, Beflammung, Ultraschall, Induktionsschweissen oder ein elektrisches Widerstandsheizelement ausgeführt.

Die Haftschicht 3 kann direkt erwärmt werden, beispielsweise durch Erwärmen der Oberfläche der Haftschicht, insbesondere durch Heissluft oder Beflammung. Eine direkte Erwärmung ist auch durch ein elektrisches Widerstandsheizelement, beispielsweise mit einem in der Haftschicht angeordneten elektrischen Widerstandsheizelement, etwa einem Metallnetz, möglich.

Zusätzlich oder alternativ kann die Haftschicht 3 auch indirekt erwärmt werden, beispielsweise durch Erwärmen des Substrats **S1,** insbesondere durch Heissluft oder Beflammung. Dies bedingt jedoch ein Substrats **S1** welches einen solchen Wärmeeintrag ohne Beschädigung übersteht. Ein solcher Wärmeeintrag erfordert jedoch typischerweise einen höheren Wärmeeintrag.

Erfolgt die Erwärmung mittels Beflammung, so ist es vorteilhaft, wenn die Oberfläche der Haftschicht 3 jeweils für 0.1 - 30 Sekunden, insbesondere 5 - 20 Sekunden, bevorzugt 10 - 15 Sekunden auf eine Temperatur von 400 C° - 600 C°, insbesondere 450 C° - 550 C°, insbesondere 480 C° - 520 C° erwärmt wird.

Die Erwärmung in Schritt ii) kann zeitlich vor und/oder während und/oder nach dem Schritt i) ausgeführt werden. Erfolgt die Erwärmung in Schritt ii) zeitlich vor dem Schritt i), erfolgt dies typischerweise kurz, insbesondere innerhalb von 30 sec, insbesondere innerhalb von 10 sec, vor der Applikation in Schritt i).

Figur 5 zeigt einen schematischen Querschnitt durch ein Substrats **S1** 4 mit teilweise aufgebrachter Abdichtungsvorrichtung 1. Dargestellt ist die Situation während bzw. nach dem Erwärmen in Schritt ii). Es ist einerseits eine indirekte Erwärmung durch eine Wärmequelle 6 dargestellt, wobei die Erwärmung durch Erwärmen des Substrats **S1** erfolgt, typischerweise durch Heissluft oder Beflammung. Die Pfeile sollen die Richtung der abgegebenen Wärme ausgehend von der Wärmequelle darstellen. Andererseits ist in Figur 5 auch eine direkte Erwärmung durch eine Wärmequelle dargestellt, welche typischerweise durch Heissluft oder Beflammung erfolgt. In der in Figur 5 dargestellten Situation erfolgen die Schritte i) des Aufbringens der Abdichtungsvorrichtung 1 sowie Schritt ii) des Erwärmens der Haftschicht 3 im Wesentlichen zeitgleich. Die Haftschicht nach dem Erwärmen 3a weist einen festen Verbund mit dem Substrat **S1** auf. Aufgrund der Rollenform der Abdichtungsvorrichtung kann nach einem anfänglichen Positionieren auf dem Substrat **S1** die Abdichtungsvorrichtung abgerollt und die Schritte i) und ii) ausgeführt werden.

Ein weiterer Aspekt der vorliegenden Erfindung betrifft ein Verfahren zum Abdichten eines Substrats **S1'** 4 umfassend die Schritte
i') Aufbringen einer Abdichtungsvorrichtung 1, welche beidseitig eine Haftschicht 3 aufweist, wie sie vorgehend beschreiben ist, auf ein Substrat **S1'** 4;
ii`) Erwärmen der dem Substrats **S1'** 4 zugewandten Haftschicht 3 der Abdichtungsvorrichtung 1, vorzugsweise auf eine Temperatur von 80 - 600 C°.
iii') Erwärmen der dem Substrats **S1'** 4 abgewandten Haftschicht 3 der Abdichtungsvorrichtung 1, vorzugsweise auf eine Temperatur von 80 - 600 C°.
iv') Aufbringen eines Substrats **S2'** 5 auf die dem Substrats **S1'** 4 abgewandten Haftschicht 3 der Abdichtungsvorrichtung 1.

Bei dem Substrat **S1'** 4 handelt es sich vorzugsweise um Substrate, wie sie vorgehend als geeignete und bevorzugte Substrat **S1** beschrieben wurden. Das Verfahren ist insbesondere geeignet, ein Substrat **S1'** abzudichten und zusätzlich mit einem Substrat **S2'** 5 zu verbinden.

Das Substrat **S2'** 5 besteht vorzugsweise aus einem Material, wie sie vorgehend als geeignete und bevorzugte Materialien für das Substrat **S1** beschrieben wurden.

Vorteilhaftes Aufbringen und Erwärmen wurden vorgehend beschreiben.

Ein weiterer Aspekt der vorliegenden Erfindung betrifft ein Verfahren zum Abdichten eines Substrats **S1"** 4 umfassend die Schritte
i") Aufbringen einer Abdichtungsvorrichtung 1, wie sie vorgehend beschreiben ist, auf ein Substrat **S1"** 4, wobei die Haftschicht 3 dem Substrat **S1"** 4 zugewandt ist;
ii") Erwärmen der Haftschicht 3 der Abdichtungsvorrichtung 1, vorzugsweise auf eine Temperatur von 80 - 600 C°.
iii") Aufbringen eines Substrats **S2"** 5 auf die Schottschicht 2 der Abdichtungsvorrichtung 1.

Bei dem Substrat **S1"** 4 handelt es sich vorzugsweise um Substrate, wie sie vorgehend als geeignete und bevorzugte Substrat **S1** beschrieben wurden. Das Verfahren ist insbesondere geeignet, ein Substrat **S1** abzudichten und zusätzlich mit einem Substrat **S2"** 5 zu verbinden, wobei das **S2"** ohne einen Haftvermittler oder Klebstoff mit der Schottschicht eine feste Verbindung eingehen kann, insbesondere wenn das Substrat **S2"** 5 beim Aufbringen auf die Schottschicht eine Temperatur von 80 - 600 C° aufweist.

Es ist daher vorteilhaft, wenn das Substrat **S2"** 5 beim Aufbringen eine Temperatur von 80 - 600 C° aufweist.

Bei dem Substrat **S2"** 5 handelt es sich vorzugsweise um Asphalt. Bei dem Aufbringen eines Substrats **S2"** handelt es sich vorzugsweise um flüssigen Asphalt mit einer Temperatur von 80 - 600 C°.

Vorteilhaftes Aufbringen und Erwärmen in Bezug auf Schritt i"), respektive Schritt ii") wurden vorgehend beschreiben.

Ein weiterer Aspekt der vorliegenden Erfindung betrifft ein Verfahren zum Abdichten eines Substrats **S1'"** 4 und eines Substrats **S2'"** 5 umfassend die Schritte
1"') Aufbringen einer Abdichtungsvorrichtung 1, wie sie vorgehend beschreiben ist, auf ein Substrat **S1'"** 4 und auf ein Substrat **S2'"** 5, wobei die Haftschicht 3 dem Substrat **S1'"** 4 und dem Substrat **S2'"** 5 zugewandt ist;
ii"') Erwärmen der Haftschicht 3 der Abdichtungsvorrichtung 1, vorzugsweise auf eine Temperatur von 80 - 600 C°.

Bei dem Substrat **S1'"** 4 und dem Substrat **S2'"** 5 handelt es sich vorzugsweise um ein Gebilde des Hoch- oder Tiefbaus, deren Berührungsfläche oder gegebenenfalls Zwischenraum zwischen den beiden Substraten man abdichten möchte. So kann es sich beispielsweise bei dem Substrat **S1'"** um Beton handeln und bei dem Substrat um ein in das Substrat **S2'"** eingelassenes Rohr.

Die Abdichtungsvorrichtung 1 erfüllt dabei die Funktion,
- Durchdringungen, beispielsweise von Armierungseisen, Leitungen, etc,
- Übergänge von verschiedenen Formkörpern, beispielsweise zwischen Beton- und Stahlbauteilen, und
- Dehn- und Arbeitsfugen, sowohl bei Ortbeton als auch Fertigteilbauweise,
   abzudichten.

Weiter kann es sich bei dem Substrat **S1'"** und **S2'"** um einander zugewandte Betonformkörper handeln. Die Abdichtungsvorrichtung 1 erfüllt dabei die Funktion eines Fugenbands. Die Abdichtungsvorrichtung 1 kann dabei auch eine Form und Merkmale aufweisen, wie sie für Fugenbänder dem Fachmann bekannt sind.

Insbesondere ist das Material des Substrats **S1'"** ein mineralisches Bindemittel wie Beton oder Gips, am meisten bevorzugt ist das Material Beton, insbesondere Beton. Bevorzugt ist das Material des Substrats **S2'"** Metall oder eine Metalllegierung oder das Material des Substrats **S2'"** ist ein mineralisches Bindemittel wie Beton oder Gips, insbesondere Beton.

Vorteilhaftes Aufbringen und Erwärmen in Bezug auf Schritt i"'), respektive Schritt ii"') wurden vorgehend beschreiben.

Ein weiterer Aspekt der vorliegenden Erfindung betrifft die Verwendung der vorgängig im Detail beschriebenen Abdichtungsvorrichtung 1 zur Abdichtung von Untergründen.

Die Abdichtungsvorrichtung wird typischerweise als vorgefertigte Bahn verwendet. In diesem Fall wird die Abdichtungsvorrichtung vorzugsweise durch einen industriellen Prozess in einem Folienwerk gefertigt und gelangt auf der Baustelle vorzugsweise in Form von einer Abdichtungsvorrichtung ab einer Rolle zum Einsatz. Die Abdichtungsvorrichtung kann jedoch auch in Form von Steifen mit einer Breite von typischerweise 1 - 20 cm zum Einsatz kommen, beispielsweise um Verbindungsstellen zwischen zwei Dachbahnen abzudichten. Weiter kann die Abdichtungsvorrichtung auch in Form von flächigen Körpern zur Reparatur von schadhaften Stellen in Abdichtungen, beispielsweise Dachbahnen, vorliegen und verwendet werden.

Eine bevorzugte Verwendung der Abdichtungsvorrichtung 1 ist daher eine Verwendung zum Abdichten gegen Feuchtigkeit von Bauten im Hoch- und Tiefbau, insbesondere von Dächern und Böden.

Ein weiterer Aspekt der vorliegenden Erfindung betrifft ein Verfahren zum Herstellung einer Abdichtungsvorrichtung 1, wie sie vorgängig im Detail beschrieben wurde, wobei die Schottschicht 2 und/oder die Haftschicht 3 durch Kalandrieren und/oder Extrusion und/oder Co-Extrusion und/oder Kaschieren hergestellt werden.

Vorzugsweise wird die Schottschicht 2 durch Kalandrieren und/oder Co-Extrusion mit der Haftschicht 3 verbunden. Weiter kann die Abdichtungsvorrichtung 1 als Endlosware hergestellt und beispielsweise auf Rollen aufgerollt werden.

Es kann weiter vorteilhaft sein, wenn bei der Herstellung die Schottschicht 2 teilweise geschäumt wird, wobei die vorgehend beschriebenen geschäumten Teile der Schottschicht 2a erhalten werden. Dies wird typischerweise durch physikalische und/oder chemische Treibmittel erreicht, welche gegebenenfalls in der Schottschicht 2 enthalten sind.

In einem weiteren Aspekt betrifft die vorliegende Erfindung einen Formkörper, wobei der Formkörper, durch vorgängiges Erwärmen der Haftschicht 3, fest mit der Haftschicht 3 der Abdichtungsvorrichtung 1 verbunden ist. Bei dem Formkörper handelt es sich typischerweise um ein Gebilde des Hoch- oder Tiefbaus. Unter dem Begriff "Formkörper" wird ein Gegenstand mit einer dreidimensionalen Ausdehnung bezeichnet.

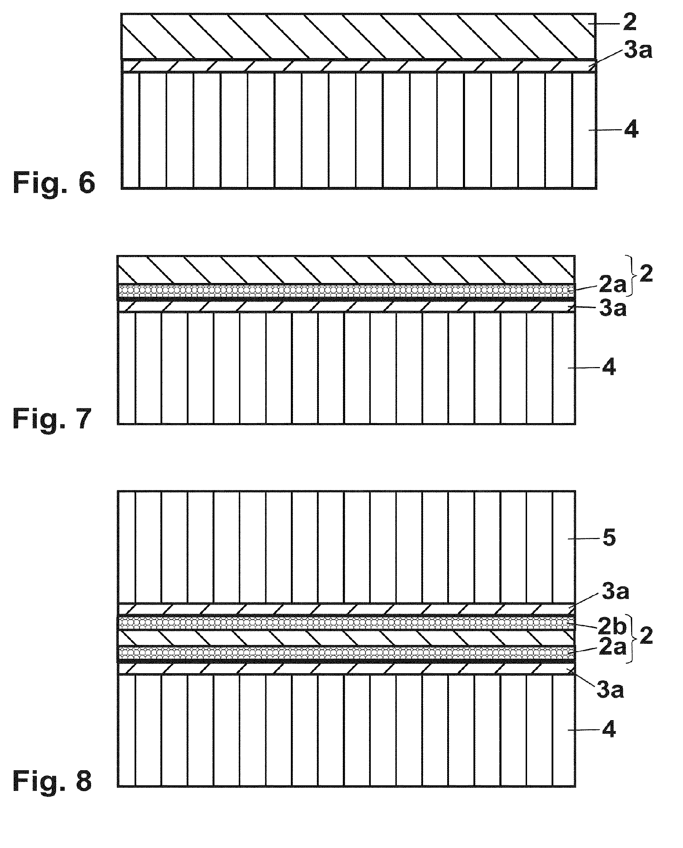

Figur 6 zeigt beispielsweise einen Formkörper bestehend aus einem Substrat **S1** welcher über die Haftschicht 3a mit der Schottschicht 2 verbunden ist. Vorzugsweise handelt es sich bei dem Formkörper um ein Fertigbauteil, welches industriel hergestellt wird. Die industrielle Herstellung erlaubt einen kontrollierteren Wärmeeintrag in die Haftschicht als beispielsweise auf einer Baustelle. Daher kann es vorteilhaft sein, auf einen geschäumten Teil 2a der Schottschicht zu verzichten. Bei solchen Formkörpern kann es sich beispielsweise um abgedichtete Fertigbauelemente für Tunnels, Wasserleitungen, Kanäle, Böden, usw. handeln.

Figur 7 zeigt beispielsweise einen Formkörper bestehend aus einem Substrat **S1** 4 welches über die Haftschicht 3a mit der Schottschicht 2 verbunden ist. Die Schottschicht weist einen geschäumten Teil 2a auf. Bei solchen Formkörpern kann es sich beispielsweise um abgedichtete Dächer und Böden handelt, insbesondere solche aus Beton.

Figur 8 zeigt beispielsweise einen Formkörper bestehend aus einem Substrat **S1** 4 welches über eine erste Haftschicht 3a mit der Schottschicht 2 verbunden ist. Die Schottschicht weist einen geschäumten Teil 2a auf. Ein Substrat **S2** 5 ist über eine weitere Haftschicht 3a mit einem zweiten geschäumten Teil 2b der Schottschicht 2 verbunden.

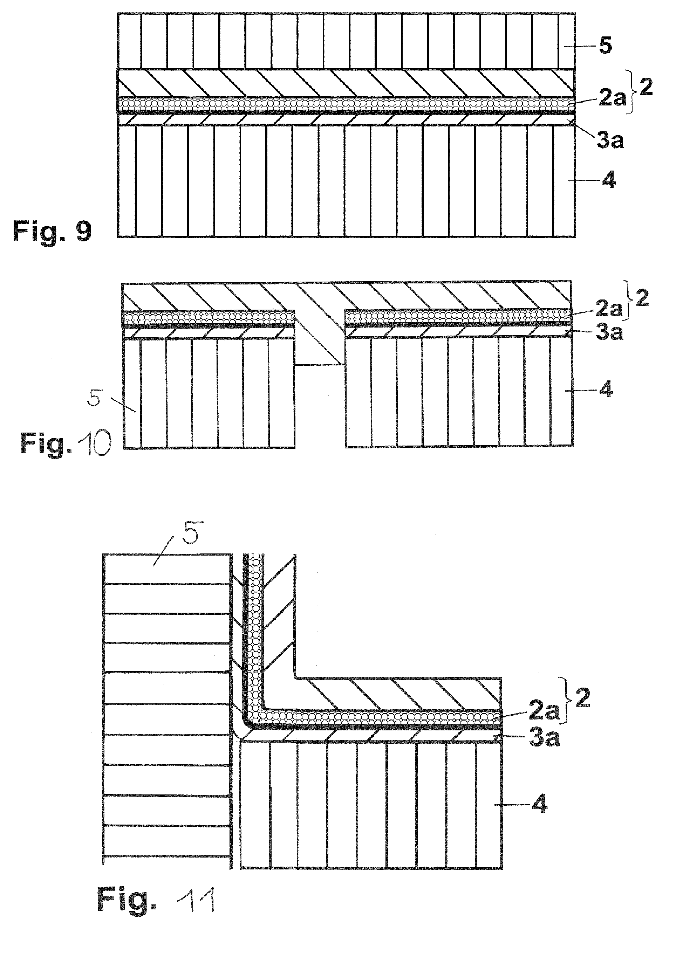

Figur 9 zeigt beispielsweise einen Formkörper bestehend aus einem Substrat **S1** 4 welches über eine erste Haftschicht 3a mit der Schottschicht 2 verbunden ist. Die Schottschicht weist einen geschäumten Teil 2a auf. Ein Substrat **S2** 5 ist direkt mit der Schottschicht 2 verbunden. Bei solchen Formkörpern kann es sich beispielsweise um einen Fahrbahnaufbau, bei welchem der Betonunterbau (Substrat **S1**) mit Hilfe der Abdichtungsvorrichtung abgedichtet wird und darauf der Asphalt (Substrat **S2**) aufgebracht wird.

Figur 10 zeigt beispielsweise einen Formkörper bestehend aus einem Substrat **S1** 4 und einem Substrat **S2** 5 welche über die Haftschicht 3a mit der Schottschicht 2 verbunden ist. Die Schottschicht weist einen geschäumten Teil 2a auf. Bei solchen Formkörpern kann es sich beispielsweise um abgedichtete Böden handelt, insbesondere solche aus Beton. Bei der Abdichtungsvorrichtung handelt es sich beispielsweise um ein Fugenband.

Figur 11 zeigt beispielsweise einen Formkörper bestehend aus einem Substrat **S1** 4 und einem Substrat **S2** 5 welche über die Haftschicht 3a mit der Schottschicht 2 verbunden ist. Die Schottschicht weist einen geschäumten Teil 2a auf. Bei solchen Formkörpern kann es sich beispielsweise um abgedichtete Durchdringungen oder Übergänge von verschiedenen Substraten handeln. Beispielsweise handelt es sich bei dem **S1** um einen Boden, insbesondere einen aus Beton, und beim Substrat **S2** handelt es sich um ein den Boden durchdringendes Rohr aus Metall oder einer Metalllegierung.

### Bezugszeichenliste

- 1: Abdichtungsvorrichtung
- 2: Schottschicht
- 2a: Geschäumter Teil der Schottschicht
- 2b: Geschäumter Teil der Schottschicht
- 3: Haftschicht
- 3a: Haftschicht nach dem Erwärmen
- 4: Substrat S1
- 5: Substrat S2
- 6: Wärmequelle, respektive Richtung der abgegebenen Wärme ausgehend von der Wärmequelle
- 9: Trägerschicht
- 10: Deckschicht

### Beispiele:

### Versuche mit Beton-Prüfkörpern

### Herstellung von Haftschichten:

Blends aus dem Ethylen-Vinylacetat-Copolymer P2, gegebenenfalls dem Polymer P3 und gegebenenfalls Azo-Dicarbonamid wurden auf einem corotierenden Doppelschneckenextruder der Firma OMC (Temperatur 110 °C, Schneckendrehzahl 200 Umdrehungen/min) extrudiert.

### Herstellung der Versuchskörper:

Versuchsmembranen wurden hergestellt indem zuerst ein verstärkendes Glasvlies mit einer Dicke von 0.2 mm durch Formpressen bei 110°C für 1 min von zwei Schichten aus der vorgehend beschriebenen Haftschicht mit jeweils einer Dicke von 0.8 mm umschlossen wurde.

Enthielten die verwendeten Haftschichten kein Azo-Dicarbonamid wurde die Versuchsmembrane auf eine Temperatur von 200 °C erhitzt durch Legen auf eine Polytetrafluorethylen-Plate mit ebensolcher Temperatur. Bei Erreichen dieser Temperatur wurde ein Beton-Prüfkörper (12 X 70 mm, Höhe 25 mm; Rocholl, geschnitten nach ISO 13640, Methode 1) auf die erhitzte Versuchsmembrane gelegt, mit einem Gewicht von zusätzlich 150 g zusätzlich beschwert und für 2 min belassen. Danach wurde der so erhaltene Versuchskörper von der Polytetrafluorethylen-Plate genommen und auf Raumtemperatur erkalten gelassen.

Enthielten die verwendeten Haftschichten Azo-Dicarbonamid wurde die Versuchsmembrane auf eine Polytetrafluorethylen-Plate gelegt und mit einem Industrieheizföhn aus einer Entfernung von 10 cm für eine Minute erwärmt. Danach wurde ein Beton-Prüfkörper (12 X 70 mm, Höhe 25 mm; Rocholl, geschnitten nach ISO 13640, Methode 1) auf die aktivierte Versuchsmembrane gelegt, mit einem Gewicht von zusätzlich 150 g zusätzlich beschwert und für 2 min belassen. Danach wurde der so erhaltene Versuchskörper von der Polytetrafluorethylen-Plate genommen und auf Raumtemperatur erkalten gelassen.

### Applikation Primer:

Für die Versuchsreihen, welche Prüfkörper mit Primer verwendeten, wurde eine Seite der Beton-Prüfkörper (12 X 70 mm, Höhe 25 mm; Rocholl, geschnitten nach ISO 13640, Methode 1) vorgängig mit einem Epoxidharz-Primer (Sika Primer 210, Sika Schweiz AG) gemäss den Vorgaben des Herstellers behandelt. Die behandelte Seite wurde dann auf die erhitzte Versuchsmembrane gelegt.

### Messung der Versuchskörper:

An den erhaltenen Prüfkörpern wurden 90° Schälversuche (bei 23°C und 50 % Luftfeuchtigkeit) unter Verwendung einer Zugprüfmaschine (Zwick) bei einer konstanten Querjochgeschwindigkeit von 100 mm/min gemacht.

| | | |
|---|---|---|
| P2 | P2-1 | EVA copolymer (28 Gew.-% Vinylacetat, MFI 3), Elvax 265, DuPont |
| | P2-2 | EVA copolymer (18 Gew.-% Vinylacetat, MFI 0.7), Elvax 470, DuPont |
| | P2-3 | EVA copolymer (12 Gew.-% Vinylacetat, MFI 0.35), Elvax 670, DuPont |
| | P2-4 | EVA copolymer (28 Gew.-% Vinylacetat, MFI 0.5), Elvax CM4875, DuPont |
| | P2-5 | EVA copolymer (28 Gew.-% Vinylacetat, MFI 6), Elvax 260A, DuPont |
| P3 | P3 | LDPE-MAH, Bynel 42E703, DuPont |
| A | Azo | Azodicarbonamid, Unicell DL75N, Dongjin Semichem Co. |
| | OBSH | 4,4'-Oxybis benzenesulfony hydrazide (OBSH), Luvopor OB, Lehmann + Voss |
| | DP | Radikalspender, Dicumylperoxid |
| | Prim | Epoxidharz-Primer, Sika Primer 210, Sika Schweiz AG |
| | Epoxy | Bisphenol A-basiertes Epoxy-Festharz, GT 7004, Huntsman |

Unter dem Begriff "MFI" wird im vorliegenden Dokument der Melt flow index, gemessen bei 190°C/2.16 kg gemäß der Norm ASTM D1238, angegeben in g/10 min, verstanden.

Figur 12 zeigt 90° Schälversuche von Haftschichten bestehend aus 95 Gew.-% P2-5 und 5 Gew.-% Azodicarbonamid (Azo), respektive 5 Gew.-% des chemischen Blähmittels 4,4'-Oxybis benzenesulfony hydrazide (OBSH), respektive 5 Gew.-% des Radikalstarters Dicumylperoxid (DP).

Figur 13 zeigt 90° Schälversuche von Haftschichten bestehend aus den in

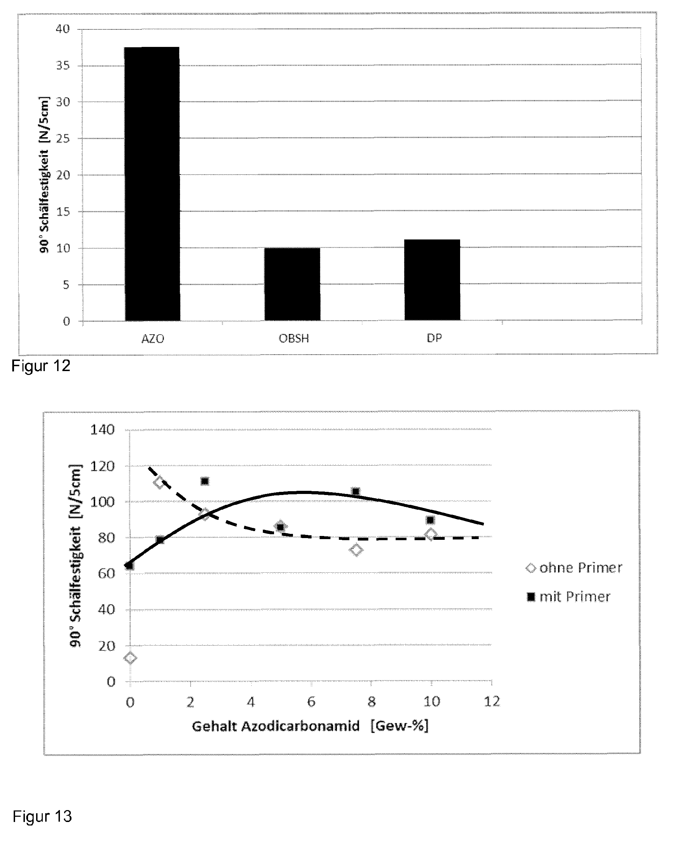

Figur 13 ausgewiesenen Mengen Azodicarbonamid in Gew.-%, der Rest der Zusammensetzung entfällt auf das Ethylen-Vinylacetat-Copolymer P2-1. Die Resultate der Messreihe, bei der unbehandelte Beton-Prüfkörper verwendet wurden, sind mit "ohne Primer" gekennzeichnet. Die Resultate der Messreihe, bei der mit Epoxy-Primer vorbehandelte Beton-Prüfkörper verwendet wurden, sind mit "mit Primer" gekennzeichnet.

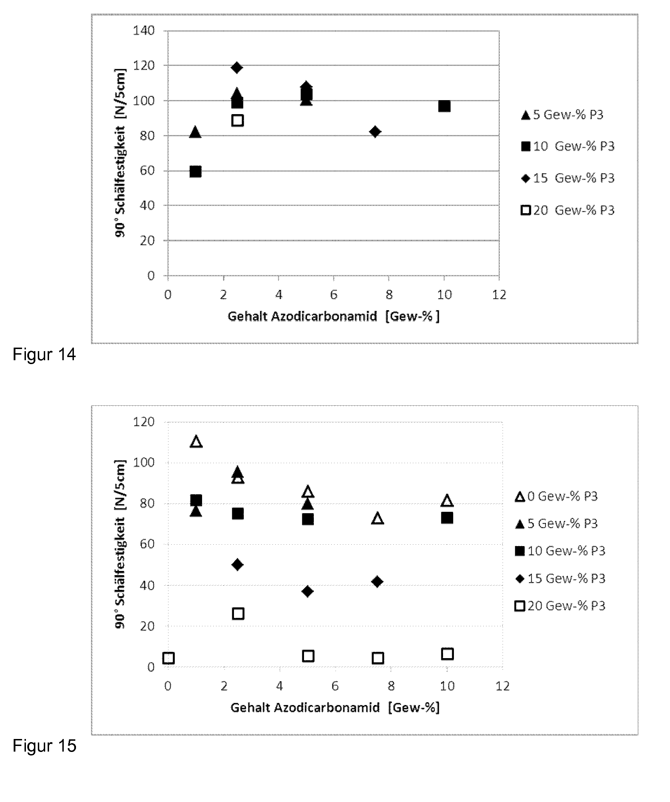

Figur 14 zeigt 90° Schälversuche von Haftschichten bestehend aus den in

Figur 14 ausgewiesenen Mengen Polymer P3 in Gew.-% und der ausgewiesenen Mengen Azo-dicarbonamid in Gew.-%, der Rest der Zusammensetzung entfällt auf das Ethylen-Vinylacetat-Copolymer P2-1. Es wurden mit Epoxy-Primer vorbehandelte Beton-Prüfkörper verwendet.

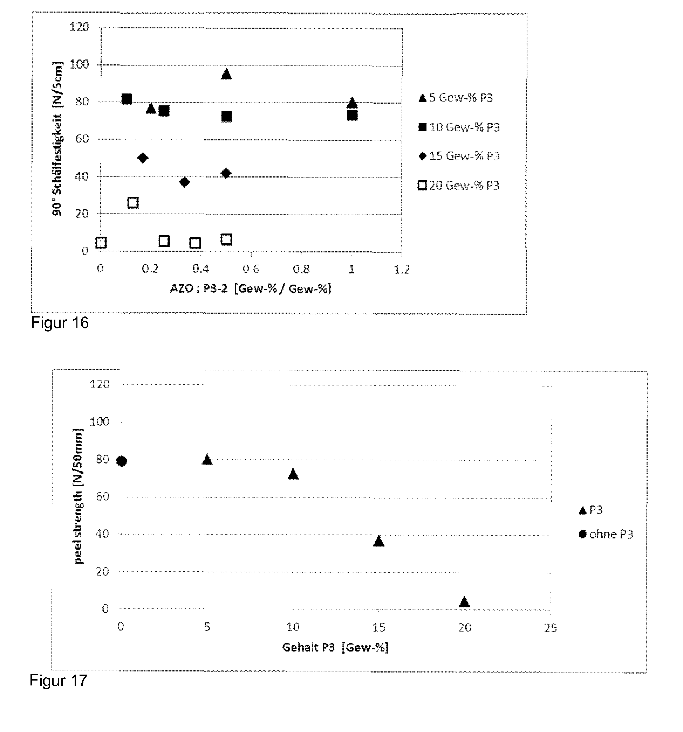

Figur 15 zeigt 90° Schälversuche von Haftschichten bestehend aus Ethylen-Vinylacetat-Copolymer P2-1 sowie der in Figur 15 ausgewiesenen Mengen Polymer P3, respektive die ausgewiesenen Mengen Azodicarbonamid (Azo), in Gew.-%. Die Resultate von Figur 15 sind in der Figur 16 als das Verhältnis der Gew.-% von (Azo : P3) dargestellt. Es wurden unbehandelte Beton-Prüfkörper verwendet.

Figur 17 zeigt 90° Schälversuche von Haftschichten bestehend aus Ethylen-Vinylacetat-Copolymer P2-1, 5 Gew.-% Azodicarbonamid (Azo) sowie der in

Figur 17 ausgewiesenen Mengen Polymer P3. Es wurden unbehandelte Beton-Prüfkörper verwendet.

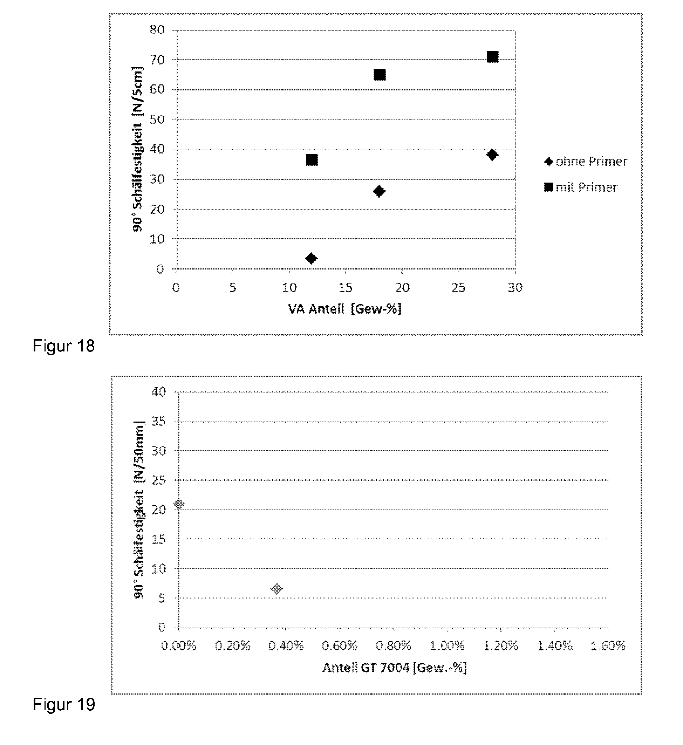

Figur 18 zeigt 90° Schälversuche von Haftschichten bestehend aus 5 Gew.-% Azodicarbonamid (Azo) und 95 Gew.-% Ethylen-Vinylacetat-Copolymer P2-3 (VA Anteil 12 Gew.-%), respektive 95 Gew.-% Ethylen-Vinylacetat-Copolymer P2-2 (VA Anteil 18 Gew.-%), respektive 95 Gew.-% Ethylen-Vinylacetat-Copolymer P2-4 (VA Anteil 28 Gew.-%). Die Resultate der Messreihe, bei der unbehandelte Beton-Prüfkörper verwendet wurden, sind mit "ohne Primer" gekennzeichnet. Die Resultate der Messreihe, bei der mit Epoxy-Primer vorbehandelte Beton-Prüfkörper verwendet wurden, sind mit "mit Primer" gekennzeichnet.

Figur 19 zeigt 90° Schälversuche von Haftschichten bestehend aus Ethylen-Vinylacetat-Copolymer P2-1, 10 Gew.-% Polymer P3 sowie der in Figur 19 ausgewiesenen Menge Epoxidharz GT 7004 (kein Azodicarbonamid).

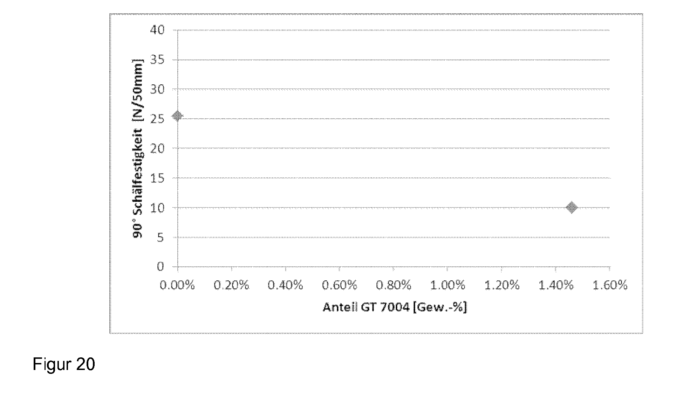

Figur 20 zeigt 90° Schälversuche von Haftschichten bestehend aus Ethylen-Vinylacetat-Copolymer P2-1, 10 Gew.-% Polymer P3, 5 Gew.-% Azodicarbonamid (Azo) sowie der in Figur 20 ausgewiesenen Menge Epoxidharz GT 7004.

### Versuch Hitzeeintrag in eine Haftschicht:

Vorgehend beschriebenen Haftschichten wurden mit zwei unterschiedlichen Dicken hergestellt, einerseits eine Dicke von 2 mm und andererseits eine Dicke von 0.3 mm. Die erstgenannten wurden direkt auf einen Untergrund (Beton) gelegt, bei den zweitgenannten wurde die Haftschicht mittels Heisspresse mit einer Schaumschicht von 1.7mm Dicke und einer Dichte von ca. 0.5 g/cm³ verbunden bevor sie (mit der Schauschicht dem Untergrund zugewandt) auf den Untergrund (Beton) gelegt wurde. Danach wurden die von dem Untergrund abgewandte Oberfläche der Haftschichten mittels eines IR-Strahlers (Firma KRELUS, Leistung P = 4.3 kW, Strahlerfeld 24cm x 56cm) im Abstand von 8 cm erwärmt. Die Haftschichten welche eine Schaumschicht hinter der Klebeschicht aufwiesen wurden doppelt so schnell aktiviert. Ferner war bei allen aktivierten Haftschichten eine Farbänderung gegenüber dem nichtaktivierten Zustand erkennbar.

### Haftversuche auf verschiedenen Substraten:

### Herstellung der Versuchsmembranen:

Es wurde eine Haftschicht bestehend aus:
Celogen AZ 130, 9 Gew.-%,
Zinkoxid, 3 Gew.-%,
Bynel CXA 42E703, 13 Gew.-%,
EVA mit VA-Gehalt von 12%, 75 Gew.-%,
   hergestellt und zusammen mit einer Schicht aus geschäumten EVA (VA-Gehalt 14%, Schaumdichte ca. 0.5 g/cm³) auf einem gleichläufigen Zweischneckenextruder (kämmend, L/D = 44:1) der Firma Berstorff (Deutschland) gemäss folgenden Extruderparametern und einer Schneckendrehzahl von 130 rpm coextrudiert.

| Zone | T1 | T2 | T3 | T4 | T5 | T6 | T7 | T8 | T9 |
|---|---|---|---|---|---|---|---|---|---|
| Temp [°C] | 30 | 50 | 82 | 105 | 113 | 120 | 120 | 120 | 105 |

| | | | | | | | | | |
|---|---|---|---|---|---|---|---|---|---|
| Extrusionsparameter | | | | | | | | | |

Die Dicke der Haftschicht betrug ca. 0.4mm, die Dicke der Schaumschicht betrug ca. 1.8mm. Die Versuchsmembran enthielt weiter ein verstärkendes Glasvlies, eine weitere ungeschäumte Schottschicht von ca. 0.9 mm sowie eine Deckschicht von 0.3mm. Die Breite der Bahn ab Extruder betrug ca. 30cm.

### Probenherstellung:

Es wurden Streifen der Versuchsmembranen mit den Dimensionen 80cm x 30cm x 3.4mm hergestellt und mit einer Geschwindigkeit von ca. 1 m/min. mit einer Wärmepistole (ca. 25cm breit, Leistung ca. 40kW, Abstand 10 cm von Haftschicht) erwärmt und mit einem Anpressdruck (Anpresswalze von 35kg pro 25cm Breite) sofort auf das Substrat gedrückt. Der Prüfkörper wurde bei Normklima (23°C / 50% rel. Luftfeuchtigkeit) 1 Tag gelagert. Danach wurde ein 50 mm breiter Prüfstreifen in die Membrane eingeschnitten und Schälfestigkeit mittels Zugwaage (Händschältest) oder auf einer Zwick-Zugprüfmaschine (Maschinenschältest) bei einem Schälwinkel von 90° ermittelt.

| Substrat | Haftung mit Handschältest |
|---|---|
| Beton | ++ |
| Steingut (fein) Oberseite | + |
| Steingut Rückseite | ++ |
| Steinzeug Rückseite | ++ |
| Ytong (Porenbeton) | + |

| Substrat | Haftung mit Maschinenschältest |
|---|---|
| Beton ohne Primer | 300 N/5cm |
| Holz, Grobspanplatten (OSB) ohne Primer | 180 N/5cm |
| Holz, Grobspanplatten (OSB) mit Sikagard 186 | 500 N/5cm |
| Zinkblech ohne Primer | 400 N/5cm |
| Zinkblech mit Sikagard 186 | 400 N/5cm |

| | |
|---|---|
| ++ = >200 N/5cm + = > 100 N/5cm, < 200 N/5cm | |

Epoxidharz-Primer, Sikagard-186, Sika Schweiz AG , wurde vorgängig gemäss Verarbeitungsrichtlinien des Herstellers abgemischt (Komp. A : Komp. B = 4:1), mittels Roller auf das entsprechende Substrat aufgetragen und dann während 7 Tagen ausgehärtet.

## Patentansprüche

1. Abdichtungsvorrichtung (1) umfassend
• eine Schottschicht (2), umfassend ein thermoplastisches Polymer **P1,**
• sowie eine Haftschicht (3), umfassend
- mindestens ein Ethylen-Vinylacetat-Copolymer (EVA) **P2** und
- Azo-dicarbonamid **A.**

2. Abdichtungsvorrichtung gemäss Anspruch 1, **dadurch gekennzeichnet, dass** das Ethylen-Vinylacetat-Copolymer **P2** einen Vinylacetat-Gehalt von 7-30 Gew.-%, insbesondere 15-30 Gew.-%, insbesondere bevorzugt 25 - 30 Gew.-%, aufweist.

3. Abdichtungsvorrichtung gemäss einem der Ansprüche 1 oder 2, **dadurch gekennzeichnet, dass** der Anteil von Azo-dicarbonamid **A** 0.1 - 15 Gew.-%, insbesondere 0.5 - 5 Gew.-%, insbesondere bevorzugt 0.5 - 3 Gew.-%, am meisten bevorzugt 0.5 - 2 Gew.-%, beträgt, bezogen auf das Gesamtgewicht der Summe von (Ethylen-Vinylacetat-Copolymer **P2** + Azo-dicarbonamid **A**).

4. Abdichtungsvorrichtung gemäss einem der Ansprüche 1 oder 2, **dadurch gekennzeichnet, dass** der Anteil von Azo-dicarbonamid **A** 2 - 10 Gew.-%, insbesondere 4-8 Gew.-%, insbesondere bevorzugt 4-6 Gew.-%, beträgt, bezogen auf das Gesamtgewicht der Summe von (Ethylen-Vinylacetat-Copolymer **P2** + Azo-dicarbonamid **A**).

5. Abdichtungsvorrichtung gemäss einem der vorhergehenden Ansprüche, **dadurch gekennzeichnet, dass** die Haftschicht (3) 0 - 12 Gew.-%, insbesondere 0- 6 Gew.-%, insbesondere bevorzugt 0 - 1 Gew.-%, am meisten bevorzugt 0 Gew.-%, bezogen auf das Gesamtgewicht der Haftschicht, eines Polymers **P3** aufweist, welches ausgewählt ist aus der Gruppe bestehend aus:
• Maleinsäureanhydrid-funktionalisiertes Polyethylen, insbesondere Maleinsäureanhydrid-funktionalisiertes LDPE oder Maleinsäureanhydrid-funktionalisiertes HDPE (PE-MAH) und
• Maleinsäureanhydrid-funktionalisiertes Copolymer aus Ethylen und Vinylacetat (EVA-MAH).

6. Abdichtungsvorrichtung gemäss einem der Ansprüche 1 oder 2, **dadurch gekennzeichnet, dass** die Haftschicht (3) weiter ein Polymer **P3** aufweist, welches ausgewählt ist aus der Gruppe bestehend aus:
• Maleinsäureanhydrid-funktionalisiertes Polyethylen, insbesondere Maleinsäureanhydrid-funktionalisiertes LDPE oder Maleinsäureanhydrid-funktionalisiertes HDPE (PE-MAH) und
• Maleinsäureanhydrid-funktionalisiertes Copolymer aus Ethylen und Vinylacetat (EVA-MAH).

7. Abdichtungsvorrichtung gemäss Anspruch 6, **dadurch gekennzeichnet, dass** der Anteil von Polymer **P3** 4 - 17 Gew.-%, insbesondere 12 - 16 Gew.-%, beträgt, bezogen auf das Gesamtgewicht der Summe von (Ethylen-Vinylacetat-Copolymer **P2** + Polymer **P3** + Azo-dicarbonamid **A**), und der Anteil von Azo-dicarbonamid **A** 2 - 6 Gew.-%, insbesondere 4 - 6 Gew.-%, beträgt, bezogen auf das Gesamtgewicht der Summe von (Ethylen-Vinylacetat-Copolymer **P2** + Polymer **P3** + Azo-dicarbonamid **A**).

8. Abdichtungsvorrichtung gemäss einem der vorhergehenden Ansprüche, **dadurch gekennzeichnet, dass** die Haftschicht (3) < 1 Gew.-%, insbesondere 0 - 0.5 Gew.-%, bevorzugt 0 - 0.1 Gew.-%, am meisten bevorzugt kein Epoxidharz aufweist, bezogen auf das Gesamtgewicht der Haftschicht.

9. Abdichtungsvorrichtung gemäss einem der vorhergehenden Ansprüche, **dadurch gekennzeichnet, dass** die Schottschicht (2) auf der der Haftschicht (3) zugewandten Seite einen geschäumten Teil (2a) aufweist.

10. Abdichtungsvorrichtung gemäss einem der vorhergehenden Ansprüche, **dadurch gekennzeichnet, dass** die Haftschicht (3) bei 23 °C klebfrei ist.

11. Verfahren zum Abdichten eines Substrats **S1** (4) umfassend die Schritte
(i) Aufbringen einer Abdichtungsvorrichtung (1) gemäss einem der Ansprüche 1 - 10 auf ein Substrat **S1** (4), wobei die Haftschicht (3) dem Substrat **S1** (4) zugewandt ist;
(ii) Erwärmen der Haftschicht (3) der Abdichtungsvorrichtung (1), vorzugsweise auf eine Temperatur von 80 - 600 C°.

12. Verfahren zum Abdichten eines Substrats **S1"** (4) umfassend die Schritte
(i") Aufbringen einer Abdichtungsvorrichtung (1) gemäss einem der Ansprüche 1 - 10 auf ein Substrat **S1"** (4), wobei die Haftschicht (3) dem Substrat **S1"** (4) zugewandt ist;
(ii") Erwärmen der Haftschicht (3) der Abdichtungsvorrichtung (1), vorzugsweise auf eine Temperatur von 80 - 600 C°.
(iii") Aufbringen eines Substrats **S2"** (5) auf die Schottschicht (2) der Abdichtungsvorrichtung (1).

13. Verfahren gemäss Anspruch 12, **dadurch gekennzeichnet, dass** es sich bei dem Substrat **S2"** (5) um Asphalt handelt.

14. Formkörper, der eine Abdichtungsvorrichtung (1) gemäss einem der Ansprüche 1 - 10 aufweist, wobei der Formkörper, durch vorgängiges Erwärmen der Haftschicht (3), fest mit der Haftschicht (3) der Abdichtungsvorrichtung (1) verbunden ist.

15. Verwendung einer Abdichtungsvorrichtung (1) gemäss einem der Ansprüche 1 - 10 zur Abdichtung von Untergründen.
